Europäisches Patentamt

European Patent Office

Office européen des brevets

(11) Veröffentlichungsnummer: **0 140 380 B1**

## (12) EUROPÄISCHE PATENTSCHRIFT

(45) Veröffentlichungstag der Patentschrift: **22.07.92**

(21) Anmeldenummer: **84113108.9**

(22) Anmeldetag: **31.10.84**

(51) Int. Cl.5: **F24J  3/00**

(54) Verfahren und Vorrichtung zur Erwärmung eines Mediums.

(30) Priorität: **02.11.83 DE 3339642**

(43) Veröffentlichungstag der Anmeldung:
**08.05.85 Patentblatt  85/19**

(45) Bekanntmachung des Hinweises auf die
Patenterteilung:
**22.07.92 Patentblatt  92/30**

(84) Benannte Vertragsstaaten:
**AT CH FR GB IT LI SE**

(56) Entgegenhaltungen:
**DE-A- 1 544 098       DE-A- 2 436 925
DE-A- 2 849 898       FR-A- 1 086 839
FR-A- 1 140 952       FR-A- 2 527 930
GB-A- 579 094         GB-A- 1 220 212
GB-A- 1 249 050       US-A- 2 823 665
US-A- 3 131 036       US-A- 4 041 961**

(73) Patentinhaber: **ZEO-TECH Zeolith Technologie
GmbH
Westendstrasse 125
W-8000 München 2(DE)**

(72) Erfinder: **Kaubek, Fritz, Dipl.-Ing.
Herbststrasse 14
W-8035 Gauting(DE)**
Erfinder: **Maier-Laxhuber, Peter, Dr.
Saumweberstrasse 14
W-8000 München 60(DE)**

EP 0 140 380 B1

## Beschreibung

Die Erfindung betrifft Verfahren u. Vorrichtungen zur Erwärmung eines Mediums mittels Trocknungselementen gemäß dem Obergriffen der Ansprüche 1 bzw. 7.

Derartige Verfahren und Vorrichtungen sind beispielsweise aus der deutschen Offenlegungsschrift 24 36 925 A 1 bekannt. Hier wird eine Masse aus trockenen, in Form von Einzelteilchen vorliegenden Materialien eingesetzt, die unbegrenzt im trockenen Zustand gelagert werden können und beim Vermischen mit Wasser Wärme während einer längeren Zeitspanne freisetzen. Infolge der chemischen Reaktionen sowie der Veränderungen des physikalischen Zustands, welche die Materialien während des Kontakts mit Wasser erfahren, können diese nicht für eine erneute Verwendung regeneriert werden.

Aus der U.S. Patentschrift 2,823,665 ist ein Wärmekissen bekannt, welches ebenfalls ein Material enthält, das in Verbindung mit Wasser einen exothermen Reaktionsprozeß auslöst. Auch diese Kissen können nur einmal verwandt werden.

Trocknungslemente enthalten Trocknungsmittel wie z. B. hygroskopische Salze, Kieselgele, Bentonite oder Zeolithe. Trocknungsmittel vermögen große Mengen Feuchtigkeit aufzunehmen. Sie werden deshalb in der Technik zur Lufttrocknung, z. B. als Sorptionstrockner in Druckluftanlagen, zur Trocknung von Flüssigkeiten, z. B. als Zeolithtrockner in Kältemittelkreisläufen und zur Trocknung von Feststoffen, z.B. bei Lebensmitteln eingesetzt.
Das Trocknungsmittel muß nach der Feuchtigkeitsaufnahme durch frisches ersetzt werden oder am Einsatzort durch geeignete Maßnahmen z. B. Druckabsenkung oder Temperaturerhöhung regeneriert werden. Diese Verfahren sind entweder kostspielig, wie im Fall des Ersatzes, oder technisch aufwendig, wie im Fall der Regeneration.

Der Erfindung liegt die Aufgabe zugrunde, in der Trocknungstechnik mit Vorteil eingesetzte Trocknungsmittel auch zur Erwärmung von Medien nutzbringend anzuwenden. Der Gebrauch soll dabei einfach und billig sein.

Gelöst wird diese Aufgabe nach den Merkmalen der Ansprüche 1 u. 7.

Insbesondere können kleine, leicht handhabbare Trocknungselemente hergestellt werden, die in einer gasdurchlässigen Hülle ein Trocknungsmittel enthalten. Durch Erwärmen werden die Trocknungselemente an Luft regeneriert und bis zur Verwendung in einer gasdichten Hülle verpackt.

Als Trocknungsmittel eignen sich besonders vorteilhaft synthetische Zeolithe wie die Typen A, X, Y und ihre ionenausgetauschten Formen wie z. B. Mg-A, Ca-A, H-Y, Mg-X etc. Diese Zeolithtypen zeichnen sich durch eine ausreichend hohe Temperatur- und Zyklenstabilität aus. Daneben verfügen sie über sehr gute Adsorptionseigenschaften.

Zur Regeneration der Zeolithe sind relativ hohe Desorptionstemperaturen nötig. Die gasdurchlässige Hülle muß diesen Temperaturen ebenfalls standhalten. Vorteilhafterweise werden deshalb für die gasdurchlässige Hülle Materialien wie Glas, Keramik, Porzellan, Kunststoff, Metall etc. eingesetzt. Die Ausgestaltung der Hülle kann dem jeweiligen Verwendungszweck angepaßt werden.

Erfindungs gemäß kann die gasdurchlässige Hülle Öffnungen besitzen, durch welche das Trokkenmittel zum Regenerieren entnommen werden kann. In einer weiteren Ausgestaltung der Erfindung kann das durch die Öffnungen entnommene Trockenmittel in einer zweiten gasdurchlässigen Hülle enthalten sein.

Der regenerierte bzw. gesättigte Zustand des Trockenmittels kann optisch durch den Farbumschlag geeigneter Substanzen, die an bzw. in dem Trockenelement angebracht sind, angezeigt werden. Zu diesen Substanzen gehören z. B. Blaugel oder natürliche und synthetische Zeolithe.
Bei der Regeneration der Trocknungselemente werden diese Substanzen mitgetrocknet.

Vorteilhaft können Trocknungselemente mit haushaltsüblichen Geräten wie Mikrowellenherd, Backofen oder Herdplatte bei Temperaturen zwischen 150 und 400 °C regeneriert werden. Mit elektrischen Widerstandsheizungen ausgerüstete Trocknungselemente können zum Trocknen direkt geheizt werden.

Bewußt angefeuchtet, können Trocknungselemente durch die freigesetzte Reaktionswärme andere Medien erwärmen.

Ausführungsbeispiele der Erfindung sind in den Zeichnungen näher beschrieben.

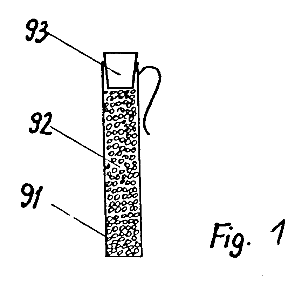

**Fig.** 1 zeigt den Schnitt durch einen Flüssigkeitserwärmer. Die gasdichte Hülle (91) wird dabei in die Flüssigkeit getaucht. Sie enthält das Trocknungselement (92) und im oberen Teil eine verschließbare Öffnung (93) zum Einfüllen von Flüssigkeit und zum Austausch des Trocknungselementes (92). Die verschließbare Öffnung (93) hat die Funktion eines Meßbehälters zum Abmessen der nötigen Flüssigkeitsmenge.

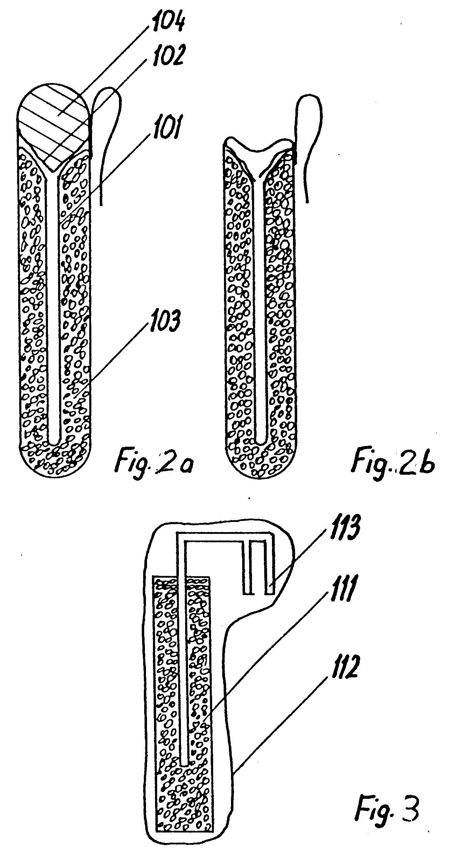

**Fig.** 2a und 2b zeigen den Schnitt durch ein Trocknungselement in der Ausgestaltung eines Wärmekörpers. Eine gasdichte Hülle (101) enthält zwei Kammern, die durch eine Membran (102) getrennt sind. Die größere Kammer enthält das Trocknungselement (103), die kleinere ist mit Wasser (104) gefüllt.
Durch äußeren Druck auf die wassergefüllte Kammer entsteht in der Membran (102) eine Öffnung zur Kammer mit dem Trocknungselement (103). Wasser strömt dadurch in das Trocknungselement (103). Die freigesetzte Reaktionswärme erwärmt durch die gasdichte Hülle (101) hindurch andere Medien.

**Fig.** 3 zeigt ein Trocknungselement (111) in einer durchsichtigen, gasdichten Hülle (112) verpackt. Das Trocknungselement (111) ist mit einem Henkel (113) versehen. Durch Eintauchen des Trocknungselementes (111) in flüssige Medien wird die Reaktionswärme freigesetzt.

**Patentansprüche**

1. Verfahren zur Erwärmung eines Mediums, **dadurch gekennzeichnet,** daß Trocknungselemente (111) verwendet werden, die aus einem Trocknungsmittel in transportablen Einheiten mit einer dieses Trocknungsmittel umgebenden gasdurchlässigen Hülle bestehen und durch Erwärmung an Luft wiederholt regenerierbar sind, mit Flüssigkeiten oder Dämpfen in Berührung gebracht werden, um dadurch Adsorptionswärme zur Erwärmung des Mediums freizusetzen.

2. Verfahren nach Anspruch 1, dadurch gekennzeichnet, daß als Trocknungsmittel Zeolithe mit großem Adsorptionsvermögen wie z. B. die Typen A, X und Y bzw. ionenausgetauschte Zeolithtypen, wie z. B. Mg-A, Ca-A, H-Y, Mg-X eingesetzt werden.

3. Verfahren nach Anspruch 1 oder 2, dadurch gekennzeichnet, daß die gasdurchlässige Hülle aus hitzebeständigen Materialien, wie z. B. Kunststoff, Glas, Keramik, Porzellan oder Metall besteht und/oder in der Formgebung dem jeweiligen Verwendungszweck angepaßt ist.

4. Verfahren nach einem der Ansprüche 1 bis 3, dadurch gekennzeichnet, daß die gasdurchlässige Hülle Öffnungen besitzt, durch welche das Trocknungsmittel entnommen und wieder eingefüllt werden kann.

5. Verfahren nach Anspruch 4, dadurch gekennzeichnet, daß durch die Öffnungen Trocknungsmittel eingebracht werden können, die mit einer weiteren gasdurchlässigen Hülle versehen sind.

6. Verfahren nach einem der Ansprüche 1 bis 5, dadurch gekennzeichnet, daß das Erwärmen an Luft in UHF-Feldern oder in Wärmeöfen oder durch elektrische Widerstandsheizungen, die innerhalb oder außerhalb der gasdurchlässigen Hülle angeordnet sind, bei Temperaturen unter 400°C und über 150°C erfolgt.

7. Vorrichtung zur Durchführung der Verfahren nach einem der Ansprüche 1 bis 6, bestehend aus durch Erwärmung an Luft wiederholt regenerierbarem Trocknungsmittel in transportablen Einheiten, mit einer dieses Trocknungsmittel umgebenden gasdurchlässigen Hülle, dadurch gekennzeichnet, daß die Trocknungselemente (111) mit einem Henkel (113) versehen und bis zur Verwendung in einer durchsichtigen gasdichten Hülle (112) verpackt sind.

8. Vorrichtung zur Durchführung der Verfahren nach einem der Ansprüche 1 bis 6, bestehend aus durch Erwärmung an Luft wiederholt regenerierbarem Trocknungsmittel in transportablen Einheiten, mit einer dieses Trocknungsmittel umgebenden gasdurchlässigen Hülle, dadurch gekennzeichnet, daß die Trocknungselemente von einer gasdichten Hülle (112) umgeben sind, daß die gasdichte Hülle eine Öffnung zum Einbringen von Flüssigkeiten oder Dämpfen und zum Austausch von Trocknungselementen (111) und die Form von Bier-und Speisewärmern hat.

9. Vorrichtung zur Durchführung der Verfahren nach einen, der Ansprüche 1 bis 6, bestehend aus durch Erwärmung an Luft wiederholt regenerierbarem Trocknungsmittel in transportablen Einheiten, mit einer dieses Trocknungsmittel umgebenden gasdurchlässigen Hülle, dadurch gekennzeichnet, daß die Trocknungselemente (103) von einer gasdichten Hülle (101) umgeben sind, daß die gasdichte Hülle (101) eine Kammer (104) mit adsorbierbarer Flüssigkeit und eine weitere Kammer mit den Trocknungselementen (103) enthält und beide Kammern durch eine zerstörbare Membran (102) voneinander getrennt sind.

10. Vorrichtung nach Anspruch 9, dadurch gekennzeichnet, daß durch Druck auf die mit Flüssigkeit gefüllte Kammer (104) in der Membran (102) eine Öffnung zur zweiten Kammer entsteht.

**Claims**

1. A process for heating a medium, characterised in that drying elements (111) are used which comprise a drying agent in transportable units, with a gas-permeable sleeve surrounding this drying agent, and which can be repeatedly regenerated by heating in the presence of air, where said drying elements (111) are brought into contact with liquids or vapours in order thus to release adsorption heat for the heating of the medium.

2. A process as claimed in Claim 1, characterised in that zeolites with a large adsorption capacity, such as for example types A, X and Y, and ion-exchanged types of zeolite, such as for example Mg-A, Ca-A, H-Y, Mg-X, are used as drying agent.

3. A process as claimed in Claim 1 or 2, characterised in that the gas-permeable sleeve consists of heat-resistant materials, such as for example synthetic resin, glass, ceramic, porcelain or metal, and/or is adapted in shape to the respective purpose of use.

4. A process as claimed in one of Claims 1 to 3, characterised in that the gas-permeable sleeve contains openings through which the drying agent can be removed and re-introduced.

5. A process as claimed in Claim 4, characterised in that drying agents provided with a further gas-permeable sleeve can be introduced through the openings.

6. A process as claimed in one of Claims 1 to 5, characterised in that the heating takes place in the presence of air in UHF-fields or in heating ovens or by electrical resistance heaters, which are arranged inside or outside the gas-permeable sleeve, at temperatures lower than 400xC and greater than 150xC.

7. A device for the execution of the process claimed in one of Claims 1 to 6, comprising a drying agent, which can be repeatedly regenerated by heating in the presence of air, in transportable units, with a gas-permeable sleeve surrounding said drying agent, characterised in that the drying elements (111) are provided with a handle (113) and are packed in a transparent, gas-tight sleeve (112) until they are used.

8. A device for the execution of the process claimed in one of Claims 1 to 6, comprising a drying agent, which can be repeatedly regenerated by heating in the presence of air, in transportable units, with a gas-permeable sleeve surrounding said drying agent, characterised in that the drying elements are surrounded by a gas-tight sleeve (112), and that the gas-tight sleeve contains an opening for introducing liquids or vapours and for replacing drying elements (111) and has the form of beer- and food warmers.

9. A device for the execution of the processes claimed in one of Claims 1 to 6, comprising a drying agent, which can be repeatedly regenerated by heating in the presence of air, in transportable units, with a gas-permeable sleeve surrounding said drying agent, characterised in that the drying elements (103) are surrounded by a gas-tight sleeve (101), that the gas-tight sleeve (101) comprises a chamber (104) containing adsorbable liquid and a further chamber containing the drying elements, and that the two chambers are separated from one another by a destructible membrane (102).

10. A device as claimed in Claim 9, characterised in that an opening to the second chamber is formed in the membrane (102) by subjecting the liquid-filled chamber (104) to pressure.

**Revendications**

1. Procédé de chauffage d'un milieu, caractérisé
en ce qu'il consiste à utiliser des éléments de dessiccation (111), qui sont constitués d'un agent déshydratant en unités transportables, avec une enveloppe perméable aux gaz entourant cet agent déshydratant, et qui peuvent être régénérés d'une manière répétée par chauffage à l'air et à les mettre en contact avec des liquides ou avec des vapeurs pour dégager ainsi de la chaleur d'adsorption pour chauffer le milieu.

2. Procédé suivant la revendication 1, caractérisé
en ce qu'il consiste à utiliser comme agents déshydratants des zéolites ayant un grand pouvoir d'adsorption, comme par exemple les zéolites de type A, X et Y ou les types de zéolites ayant échangé des ions, comme par exemple Mg-A, Ca-A, H-Y, MgX.

3. Procédé suivant la revendication 1 ou 2, caractérisé
en ce que l'enveloppe perméable aux gaz est en matériau résistant à la chaleur, comme par exemple en matière plastique, en verre, en céramique, en porcelaine ou en métal et/ou est adaptée dans sa forme aux buts d'utilisation.

4. Procédé selon l'une des revendications 1 à 3, caractérisé
en ce que l'enveloppe perméable aux gaz possède des orifices par lesquels l'agent déshydratant peut être prélevé et par lesquels on peut la remplir à nouveau d'agent déshydratant.

5. Procédé selon la revendication 4,
caractérisé
en ce que l'on peut introduire par les orifices des agents déshydratants qui sont munis d'une autre enveloppe perméable aux gaz.

6. Procédé suivant l'une des revendications 1 à 5,
caractérisé
en ce que le chauffage à l'air dans des champs ultra hautes fréquences ou dans des fours de chauffage ou par chauffage par résistances électriques, qui sont disposées dans l'enveloppe perméable aux gaz ou à l'extérieur de celle-ci s'effectue à des températures inférieures à 400°C et supérieures à 150°C.

7. Dispositif pour la mise en oeuvre du procédé suivant l'une des revendications 1 à 6, constitué d'un agent déshydratant pouvant être régénéré de manière répétée par chauffage à l'air et se trouvant dans des unités transportables avec une enveloppe perméable aux gaz entourant cet agent déshydratant,
caractérisé
en ce que les éléments de dessiccation (111) sont munis d'une anse (113) et sont emballés dans une enveloppe (112) transparente et étanche aux gaz jusqu'à leur utilisation.

8. Dispositif pour la mise en oeuvre du procédé selon l'une des revendications 1 à 6, constitué d'un agent déshydratant pouvant être régénéré de manière répétée par chauffage à l'air et se trouvant dans des unités transportables avec une enveloppe perméable aux gaz entourant cet agent déshydratant,
caractérisé
en ce que les éléments de dessiccation sont entourés d'une enveloppe (112) étanche aux gaz, en ce que l'enveloppe étanche aux gaz a un orifice d'introduction de liquide ou de vapeur et de remplacement des éléments de dessiccation (111) et a la forme d'un dispositif de réchauffage de la bière et des aliments.

9. Dispositif pour la mise en oeuvre du procédé suivant l'une des revendications 1 à 6, constitué d'un agent déshydratant pouvant être régénéré de manière répétée par chauffage à l'air et se trouvant dans des unités transportables avec une enveloppe perméable aux gaz entourant cet agent déshydratant,
caractérisé
en ce que les éléments de dessiccation (103) sont entourés d'une enveloppe (101) étanche aux gaz, en ce que l'enveloppe (101) étanche aux gaz comporte une chambre (104) ayant du liquide adsorbable et une autre chambre ayant les éléments de dessiccation (103) et les deux chambres sont séparées l'une de l'autre par une membrane (102) susceptible d'être détruite.

10. Dispositif suivant la revendication 9,
caractérisé
en ce qu'en appuyant sur la chambre (104) emplie de liquide il se forme, dans la membrane (102), un orifice menant à la deuxième chambre.

Fig. 1

Fig. 2 a

Fig. 2 b

Fig. 3